(19) Europäisches Patentamt / European Patent Office / Office européen des brevets

(11) **EP 1 964 348 B1**

(12) **FASCICULE DE BREVET EUROPEEN**

(45) Date de publication et mention de la délivrance du brevet:
**02.12.2015 Bulletin 2015/49**

(21) Numéro de dépôt: **06830741.2**

(22) Date de dépôt: **20.12.2006**

(51) Int Cl.:
*H04L 27/26* $^{(2006.01)}$ *G06F 7/72* $^{(2006.01)}$
*G06F 17/14* $^{(2006.01)}$

(86) Numéro de dépôt international:
**PCT/EP2006/069970**

(87) Numéro de publication internationale:
**WO 2007/071705 (28.06.2007 Gazette 2007/26)**

(54) **Procédé de réception d'un signal à porteuses multiples, procédé d'émission, récepteur et émetteur correspondants**

Verfahren zum empfangen eines Mehrträgersignals, entsprechendes Übertragungsverfahren, Empfänger und Sender

Method for receiving a multicarrier signal, corresponding transmission method, receiver and transmitter

(84) Etats contractants désignés:
**DE FR GB**

(30) Priorité: **22.12.2005 FR 0554051**

(43) Date de publication de la demande:
**03.09.2008 Bulletin 2008/36**

(73) Titulaire: **Thomson Licensing**
**92130 Issy-les-Moulineaux (FR)**

(72) Inventeurs:
• **DORE, Renaud**
  **F-35000 Rennes (FR)**
• **DEMOULIN, Vincent**
  **F-35160 Montfort Sur Meu (FR)**
• **MOCQUARD, Olivier**
  **F-35000 Rennes (FR)**
• **GUILLOUARD, Samuel**
  **F-35135 Chantepie (FR)**

(74) Mandataire: **Le Dantec, Claude**
**Technicolor**
**1, rue Jeanne d'Arc**
**92443 Issy-les-Moulineaux (FR)**

(56) Documents cités:
**WO-A1-01/88694**

• **KOSEK M R ET AL: "RNS-based GaAs signal processing system" IEEE, 15 octobre 1989 (1989-10-15), pages 615-619, XP010083519**
• **BAYOUMI M A ET AL: "A QUADRATIC RESIDUE PROCESSOR FOR COMPLEX DSP APPLICATIONS" INTERNATIONAL CONFERENCE ON ACOUSTICS, SPEECH & SIGNAL PROCESSING. ICASSP. DALLAS, APRIL 6 - 9, 1987, NEW YORK, IEEE, US, vol. VOL. 1 CONF. 12, avril 1987 (1987-04), pages 475-478, XP000758118**
• **MADHUKUMAR A S ET AL: "Design and performance of residue number system based multicarrier CDMA in frequency-selective rayleigh fading channels" SIGNALS, SYSTEMS AND COMPUTERS, 2000. CONFERENCE RECORD OF THE THIRTY-FOURTH ASILOMAR CONFERENCE ON OCT. 29 - NOV. 1, 2000, PISCATAWAY, NJ, USA,IEEE, vol. 2, 29 octobre 2000 (2000-10-29), pages 884-888, XP010535132 ISBN: 0-7803-6514-3**
• **TAYLOR F J ED - HWANG KAI INSTITUTE OF ELECTRICAL AND ELECTRONICS ENGINEERS: "A MORE EFFICIENT RESIDUE ARITHMETIC IMPLEMENTATION OF THE FFT" PROCEEDINGS OF THE SYMPOSIUM ON COMPUTER ARITHMETIC. URBANA, JUNE 4 - 6, 1985, SILVER SPRING, IEEE COMPUTER SOCIETY PR, US, vol. SYMP. 7, 4 juin 1985 (1985-06-04), pages 243-250, XP000746044**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 964 348 B1

**Description**

1. Domaine de l'invention.

La présente invention concerne le domaine des communications radio et plus particulièrement l'émission et la réception d'un signal à porteuses multiples.

2. Arrière plan technologique.

Selon l'état de l'art, plusieurs types de modulations à porteuses multiples, par exemple la modulation DMT (de l'anglais « discrète Multitone » ou à tonalités multiples discrètes en français) ou la modulation OFDM (de l'anglais « Orthogonal Frequency Division Multiplexing » ou à « Multiplexage à répartition de fréquences orthogonal ») ou encore COFDM (correspondant à une modulation OFDM codée). Selon l'état de la technique, la démodulation d'un signal à porteuses multiples met en oeuvre une FFT (ou transformée de Fourrier rapide de l'anglais « Fast Fourrier Transform ») basée sur une représentation binaire d'un symbole OFDM. Ainsi, le document intitulé « principles of modulation and channel coding fo digital broadcasting for mobile receivers » (ou « principes de modulation et codage de canal pour la diffusion numérique vers des recepteurs mobiles » en français ») (écrit par Alard et Lassale et publié en août 1987 dans la revue technique de l'EBU) décrit une méthode de démodulation d'un signal ODFM mettant en oeuvre une FFT. La modulation COFDM est également mise en oeuvre dans de nombreuses normes de télécommunications radio (notamment pour le DAB (ou Diffusion radio numérique de l'anglais « Digital Audio Broadcasting »), le DVB-T (ou télévision numérique terrestre de l'anglais « Digital Video Broadcasting -Terrestrial »), DVB-H (DVB pour terminaux portables de l'anglais « Handheld »), IEEE 802.11 à 5 GHz, IEEE 802.16.

Une FFT à N points (valant par exemple 256) consiste à prendre N entrées complexes (la $i$ème entrée étant notée input(i)) et à fournir N sorties (la $k$ème sortie étant notée output(k)) telles que définies ci-après:

$$Output(k) \quad = \quad \sum_{i=-N/2+1}^{N/2} input(i) * \exp(-2ji\pi k/N) \qquad (1)$$

l'entier k étant compris dans l'intervalle *]-N/2;+N/2]* et où *j* correspond au nombre imaginaire pur.

Selon la formule (1), le nombre de multiplications et d'additions est de l'ordre de $N^2$. Selon l'état de l'art, afin de réduire le nombre d'opérations, on utilise une opération élémentaire dite du papillon. Cette opération est à étapes multiples est d'une complexité de l'ordre de N*Log(N) opérations, où l'opérateur Log est exprimé dans la base du « radix » et est typiquement égale à 2 ou 4. Ainsi, une FFT à 64 points est typiquement à trois étapes en base 4 ou à six étapes en base 2 ($64 = 4^2 = 2^6$). A chaque étape, on multiplie un signal d'entrée sur n bits par un facteur dit « twiddle » sur p bits. Le résultat d'une étape est arrondi avant d'être utilisé en tant qu'entrée à l'étape suivante, le multiplieur étant particulièrement large (par exemple 12x10 bits). Typiquement, un module FFT attend le dernier échantillon du block à venir et peut délivrer une sortie FFT quelques dizaines de cycles d'horloge plus tard.

Ainsi, les techniques de l'état de l'art présentent l'inconvénient d'être relativement complexe notamment lorsque le nombre de porteuses est faible.

KOSEK M R et AL : "RNS-based GaAs signal processing system", IEEE, 15 octobre 1989, pages 615-619, XP010083519, décrit une technologie GaAs comprenant des filtres numériques et des Transformées de Fourier discrètes, qui combinée avec le parallélisme d'une représentation RNS, permet d'accélérer des opérations de niveau multiply-accumulate multiply-accumulate MAC.

**3. Résumé de l'invention.**

L'invention a pour but de pallier ces inconvénients de l'art antérieur.

Plus particulièrement, l'invention a pour objectif de permettre une démodulation en réduisant sa complexité, en étant plus efficace et/ou consommant moins d'énergie.

A cet effet, l'invention propose un procédé de réception d'un signal à porteuses multiples (par exemple COFDM ou DMT), comme il est défini par la revendication 1.

De plus, l'invention concerne un dispositif de réception d'un signal à porteuses multiples (COFDM, DMT), comme il est défini par la revendication indépendante 8.

4. Liste des figures.

L'invention sera mieux comprise, et d'autres particularités et avantages apparaîtront à la lecture de la description qui va suivre, la description faisant référence aux dessins annexés parmi lesquels :

- la figure 1 est un synoptique très schématique d'un système de communication sans fil selon un mode particulier de réalisation de l'invention ;
- la figure 2 présente schématiquement un émetteur/récepteur du système de la figure 1 ;
- les figures 3 et 4 illustrent respectivement un module d'émission OFDM et un module de réception OFDM mis en oeuvre dans l'émetteur/récepteur de la figure 2 ;
- les figures 5 et 6 sont des illustrations conceptuelles d'un module de transformée de Fourrier mis en oeuvre dans le module de réception de la figure 4 ;
- la figure 7 présente de manière détaillée un module de transformée de Fourrier mis en oeuvre dans le module de réception de la figure 4 ;
- la figure 8 illustre un module de transformée de Fourrier avec fenêtre glissante selon une variante de l'invention ;
- la figure 9 présente schématiquement une représentation MRC mise en oeuvre selon l'invention ; et
- la figure 10 illustre une synchronisation et une détermination de coefficients d'égalisation mise en oeuvre dans le module de réception de la figure 4.

5. Description détaillée de l'invention.

Selon l'invention, on utilise une représentation modale pour effectuer des calculs de traitement du signal dans un émetteur ou un récepteur, et notamment des transformées de Fourrier, une synchronisation ou des calculs de coefficients d'égalisation. En particulier, on utilise une représentation modale des échantillons et des différents paramètres dans la formule (1) définie précédemment pour calculer des transformées de Fourrier avec, préférentiellement, des valeurs de N relativement faibles, N étant égal, par exemple à 256, 128 ou à des valeurs inférieures. Selon l'invention, les nombres sont représentés sous une forme modale qui simplifie les calculs de la formule (1) et rend possible de traiter N échantillons en parallèle. On utilise notamment une représentation modale du type RNS (de l'anglais « Residue Number System » ou « Système de nombres résidus » en français) ou une variante du type QRNS (RNS quadratique), qui est basée sur le théorème du reste chinois (ou « Chinese remainder » en anglais) qui est démontré dans le cadre de la théorie des nombres. Selon une représentation modale, des signaux sont représentés dans une base modulo des nombres premiers entre eux définissant cette base pour les opérations utilisées dans une modulation à porteuses multiples et de démodulation correspondante.

Préférentiellement, les nombres définissant la base sont préférentiellement des nombres premiers afin d'améliorer l'efficacité des opérations et de simplifier les opérations de multiplication.

Avantageusement, l'invention est appliquée à une modulation ou démodulation OFDM (pouvant être associée à des modulations à quatre phases (QPSK de l'anglais Quaternary Phase Shift Keying) ou à modulation amplitude en quadrature (QAM de l'anglais Quadrature Amplitude Modulation)).

Représentation dans une base de nombres premiers.

Nous allons d'abord rappeler quelques fondements mathématiques. On considère un ensemble de nombres premiers m1, m2, m3, .... mj appelé ensemble de base et un nombre n quelconque. On calcule le nombre n modulo les éléments de l'ensemble de base (l'opération « modulo i » est notée [i]) et on définit un ensemble de nombres n1, n2, ... nj, un nombre ni étant égal à n[mi] (n modulo mi) pour i compris entre 1 et j, soit :

$$n1 = n\,[\,m1],\ n2 = n\,[\,m2],\ n3 = n\,[\,m1],\ n4 = n\,[\,m4],\ ..,\ nj = n\,[\,mj].$$

On note M le produit des éléments mi pour i compris entre 1 et j, soit M= m1*m2*m3*..*mj (ou $M = \prod_{i=1}^{j} mj$). Selon le théorème du reste chinois, le j-uple (n1, n2, .... nj) (j-tuple en anglais) définit de manière biunivoque le nombre n dans l'intervalle compris entre 0 et le produit des éléments mi (soit [0, M -1]. Ainsi, les représentations n et (n1, n2, ....nj) sont équivalentes sur l'intervalle [0, M -1]. Dans le cadre de l'invention, avantageusement, n sera considéré dans un intervalle centré autour de 0 soit [-M/ 2; +M / 2] (à une unité près pour les bornes inférieures et supérieures, cet intervalle devant contenir M éléments).

L'intérêt de cette représentation appelée représentation modale ("modal representation" en anglais) est que les opérations du type addition et multiplication peuvent être effectuées séparément. En effet, si a est un j-uplet (a1, a2, .... aj) et b est un j-uplet (b1, b2, b3, bj), la somme (respectivement le produit) de a et b s'exprime comme sous la forme d'un j-uplet dont chaque composante s'exprime comme la somme (respectivement le produit) de chacune des composantes de a et b de même rang dans le j-uplet, soit :

$$a+b= (a1+b1, a2+b2, a3+b3, ..,aj+bj)$$

et

$$a*b= (a1*b1, a2*b2, a3*b3, ..,aj*bj).$$

Ainsi, grâce à l'invention, des opérations généralement complexes (du type transformées de Fourrier), sont considérablement simplifiées. A titre illustratif, si une base (m1, m2, m3,m4) vaut (251, 241, 239 et 233), chacune des opérations de multiplication et addition peut être effectuée sur huit bits sans perte de précision tant qu'elles ne dépassent pas le produit M valant 251*241*239*233 qui est approximativement un nombre de 31 bits.

Cette représentation n'est pas utilisée suivant l'état de l'art, car les opérations de comparaison ne sont pas, à première vue, simples et qu'il est donc nécessaire d'écrêter les niveaux (« level clamping » en anglais) pour éviter les débordements (« overflow » en anglais). Ainsi, il est très difficile de savoir facilement quel est le plus grand nombre parmi les deux nombres (12;201 ;123;56) et (111 ;98;83;106) exprimés dans la base ci-dessus.

Afin de résoudre cet inconvénient, selon l'invention, on considère également une représentation intermédiaire appelée MRC (ou « Mixed Radix Coefficient » en anglais ou « coefficient de radical mélangé » en français).

Représentation intermédiaire.

Selon la représentation MRC, un nombre n s'exprime sous la forme d'une somme d'un premier nombre v1, du produit d'un nombre v2 par m1 et du produit de nombres v3, m1 et m2 étant des nombres premiers soit :

$$n= v1 + v2*m1 + v3*m1*m2$$

Plus généralement,

$$n = v1 + v2*m1 + v3*m1*m2+.... vj*m1*m2*...*mj-1.$$

Ainsi, on peut comparer le nombre n représenté sous la forme (v1, v2, v3) à un nombre n' représenté dans la même base (m1, m2, ... mj) sous la forme (v1', v2', v3') sans calculer explicitement n et m.

Il est important que toutes les opérations selon cette représentations n'entraînent pas de débordements (« overflow » ou « underflow ») de l'intervalle considéré contenant les M éléments.

Traduction d'une représentation classique vers une représentation RNS ou vice-versa.

A titre illustratif, un exemple est donné ci-après d'une traduction d'une représentation classique vers une représentation RNS dans une base B (m1, m2, m3) égale à (251 ;241 ;239) ou vice-versa.

La traduction d'un nombre n correspondant à un signal d'entrée sur 10 bits vers une représentation dans la base B est simple puisque :

$$n1 = n[m1] ; n2 = n[m2] \text{ et } n3=n[m3].$$

En pratique, on peut tabuler ces opérations à l'aide de trois tables de calcul préprogrammé (en anglais « look-up » tables) de 1 Kx8bits (sous forme de PROM par exemple, comprenant à l'adresse n le résultat de l'opération n[mi]).

La traduction d'une représentation dans la base B vers une représentation classique est moins aisée. Soit n valant (n1, n2, n3) dans la base B et on souhaite exprimer n initialement dans l'intervalle [0,M[ comme s'il était dans l'intervalle [- M/2, M/2[.

Il existe des nombres p1, p2 et p3 tels que :

$$n = n1 + p1*m1, \text{ avec } 0=<n1<m1 \text{ et } 0=< p1 < m2*m3 \quad (1');$$

$$n = n2 + \quad p2*m2 \; ,$$

, avec

$$0 =< n2 < m2 \text{ et } 0 =< p2 < m1*m3 \quad (2') \; ;$$

et

$$n = \quad n3 + p3*m3 \; ,$$

avec

$$0 =< n3 < m3 \text{ et } 0 =< p3 < m1*m2 \quad (3')$$

$$n1 + p1*m1 = n2 + p2*m2$$

Soit c1, l'inverse de m1 dans Z/m2Z (où Z représente l'ensemble des entiers relatifs): c1*m1= 1 [m2]

$$n1*c1 + p1*m1*c1 = n2*c1 + p2*m2*c1 \qquad (4')$$

donc p1 [m2] = (n2-n1)*c1 [m2].
Soit, v1= n1 sur [0;m1 [ ; v2= (n2-n1)*c1 sur [0;m2[; et v3 tel que p1= v2 + v3*m2. Sous la forme d'une représentation intermédiaire, on a :

$$n = v1 + p1*m1 = v1 + (v2 + v3*m2)*m1 = v1 + v2*m1 + v3*m1*m2 \quad (5')$$

Des relations (3') et (5'), on peut déduire :

$$v1 + v2*m1 + v3*m1*m2 = n3 + p3*m3 \qquad (6')$$

On considère c2 inverse de m1*m2 dans Z/m3Z, d'où c2*m1*m2= 1 [m3]
Comme précédemment, nous avons :

$$v1*c2 + v2*m1*c2 + v3*m1*m2*c2 = n3*c2 + p3*m3*c2$$

et

$$v1*c2 + v2*m1*c2 + v3 = n3*c2 \quad [m3]$$

[m3] d'où :

$$v3 = (n3 - v1 - v2 * m1)) *c2$$

En considérant les coordonnées MRC v1, v2 et v3 comme des nombres signés sur leurs modulos respectifs, on se ramène sur l'intervalle [-m1 *m2*m3/2;m1*m2*m3/2[.
Un mode de réalisation matérielle ("hardware" en anglais) met en oeuvre, par exemple, l'une des séquences suivantes qui conduisent des nombres résultant de plus en plus grand après chacune des trois passes. Les constantes sont préférentiellement pré-calculées.

Soit n = (n1, n2, n3).

On définit ou calcule les nombres suivants :

- X= v1= n1 (aucune opération) ;
- Y= v2*m1= (n2-n1)*c1*m1 on [0;m2*m1[, soit en pratique une soustraction sur 8 ou 9 bits selon l'exemple donné, une multiplication par une constante c1*m1 et un résultat intermédiaire sous environ 16 à 18 bits ;
- Z= v3*m1*m2= (n3-v1-Y)*c2*m1*m2 , soit en pratique une double soustraction sur 16 à 18 bits selon l'exemple donné, une multiplication par une constante c2*m1*m2, un résultat intermédiaire sous environ 25 à 28 bits.

Ainsi, on a obtenu une représentation MRC du nombre n sous la forme (v1, v2, v3).

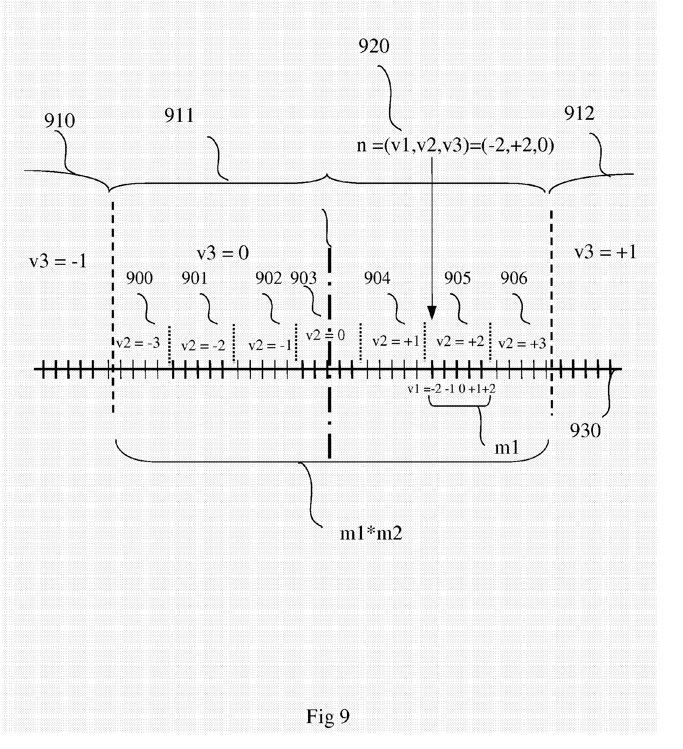

La figure 9 illustre une représentation MRC du type (v1, v2, v3) avec m1 valant 5, m2 valant 7 et m3 un autre nombre premier avec 5 et 7.

L'axe gradué 930 illustre la succession des nombres n, par pas d'une unité. On peut définir trois zones 910 à 912 correspondant aux zones où v3 vaut respectivement -1, 0 et +1. Chacune des zones 910 à 912 est divisée en sous zones correspondant à une valeur donnée de v2, la valeur de v2 allant croissante lorsque n croit à l'intérieur d'une des zones 910 à 912. Ainsi, la zone 911 est découpée en 7 zones 900 à 906 correspondant respectivement à v2 allant de -3 à +3. A l'intérieur de chacune des zones correspondant à une valeur donnée de v2 est divisée, on retrouve les graduations de l'axe 930 correspondant à une valeur donnée de v1, la valeur de v1 allant croissante lorsque n croit à l'intérieur d'une des zones pour des valeurs de v2 et v3 données. Ainsi, la zone 905, correspondant à (v2,v3) valant (2 ;0) comprend cinq graduations successives correspondant à v1 allant de -2 à +2. A titre illustratif, le nombre n correspondant à la référence 920 correspond à la première graduation sur l'axe 930 dans les zones 905 et 911 et peut donc être représenté sous la forme (v1,v2,v3) = (-2, +2, 0). En résumé, chaque zone à v2 et v3 comprend m1 valeurs de n. Chaque zone à v3 constant comprend un produit m1*m2 valeurs de n. L'ensemble de l'intervalle comprenant M=m1*m2*m3 valeurs.

On remarque qu'ainsi il est aisé de comparer deux nombres représenté sous forme MRC, puisqu'il suffit de comparer d'abord les valeurs de v3 correspondantes, et, si les valeurs de v3 sont égales, de comparer les valeurs de v2, et, si les valeurs de v2 sont aussi égales, de comparer les valeurs de v1.

Pour revenir à une représentation binaire, on a n égal à la somme de X, Y et Z (soit n=X+Y+Z), ce qui en pratique correspond à trois soustractions sur 26 à 19 bits. On peut désormais également arrondir le résultat (par exemple à 10 ou 12 bits).

Préférentiellement, on ne met pas en oeuvre de multiplieur. En effet, on multiplie des nombres par des constantes. Ainsi, les multiplications sont préférentiellement mises en oeuvre par des tables pré-calculées (ou pré-enregistrées) (*look-up tables*) ou des additionneurs.

<u>Base de nombres.</u>

Selon une représentation modale mise en oeuvre dans l'invention, du type RNS, la base utilisée pour représenter les signaux comprend des nombres premiers entre eux deux à deux. Préférentiellement, la base utilisée comprend des nombres premiers dans l'absolu.

Avantageusement, les nombres de la base s'expriment sous la forme d'un multiple de 4 plus 1 (soit 4p+1) (par exemple, 229, 233 et 241 sont des nombres de cette forme pouvant être codés sur 8 bits). En effet, une multiplication de nombres complexes qui comprend habituellement deux multiplications et deux additions de nombres réels est réduite, en utilisant une telle base à de simple conversion entre entrées et sorties, appelée QRNS (de l'anglais « Quadratic RNS » ou RNS quadratique en français). En effet, selon un RNS, les parties réelles et imaginaires pures d'un signal d'entrée sont converties séparément en représentation RNS réelle et en représentation RNS imaginaire pure. Selon un QRNS, cette conversion est croisée (« cross-coupled » en anglais). Plus précisément, si chaque composante d'un nombre complexe xr+j*xi est convertie dans des bases réelles r1, r2 et r3 et imaginaires j*i1, j*i2 et j*i3 en RNS. Alors en QRNS, dans Z/mlZ (I valant 1, 2 ou 3), on représente ce nombre sous une forme (Xi, Xi') où :

- Xi est la somme de xr et d'un produit de q par xi (Xi = xr+ql*xi [ml]) ;

- Xi' est la différence de xr et d'un produit de q par xi (Xi' = xr-ql*xi [ml]) ; et

- ql est racine de -1 dans Z/mlZ.

Ainsi, selon l'invention, une représentation RNS ou QRNS permet de construire un coeur de transformée de Fourrier avec une latence très faible et avec un enchaînement rapide produisant, par exemple, un résultat en sortie pour chaque échantillon d'entrée. Une représentation modale (RNS et/ou QRNS) est également mise en oeuvre avantageusement pour effectuer une synchronisation de préambule ainsi que la calcul de coefficient d'égalisation.

Description détaillée d'un mode de réalisation.

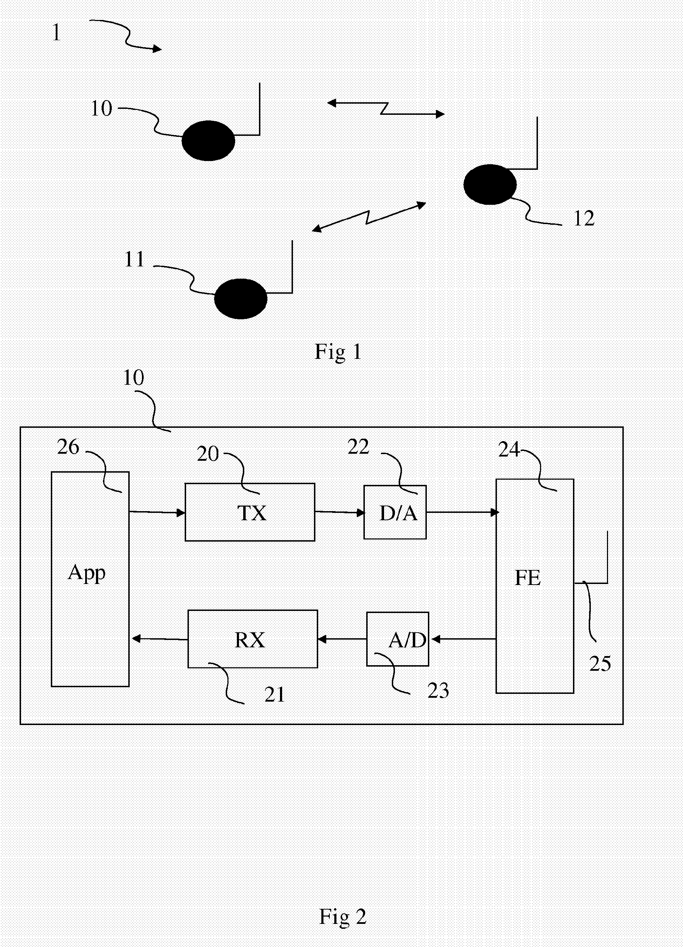

La figure 1 présente schématiquement un système de communication 1 sans fil selon un mode particulier de réalisation de l'invention.

Le système 1 comprend des terminaux et/ou stations relais 10 à 12 mettant en oeuvre une modulation de type OFDM.

La figure 2 représente schématiquement un émetteur/récepteur 10 du réseau 1 et plus précisément les parties correspondant à la couche physique.

L'émetteur/récepteur 10 comprend :

- un module 26 correspondant à une application et assurant l'interface avec la couche physique ;
- un module de transmission 20 recevant des données à transmettre du module 26 ;
- un convertisseur numérique/analogique 22 convertissant en un signal analogique, un signal numérique reçu du module de transmission 20 ;
- une interface radio (ou « radio front-end » en anglais) 24 reliée à une antenne 25 en charge de la transmission des signaux en provenance du convertisseur 22 et de la réception des signaux transmis par d'autres émetteurs OFDM 11, 12 du système 1, à destination d'un convertisseur 23 ;
- le convertisseur analogique/numérique 23 recevant un signal analogique de l'interface 24 ;
- un module de réception 21 recevant le signal reçu par l'interface radio et numérisé par le convertisseur 23 et le décodant pour transmettre un signal de données utiles et exploitables au module 26.

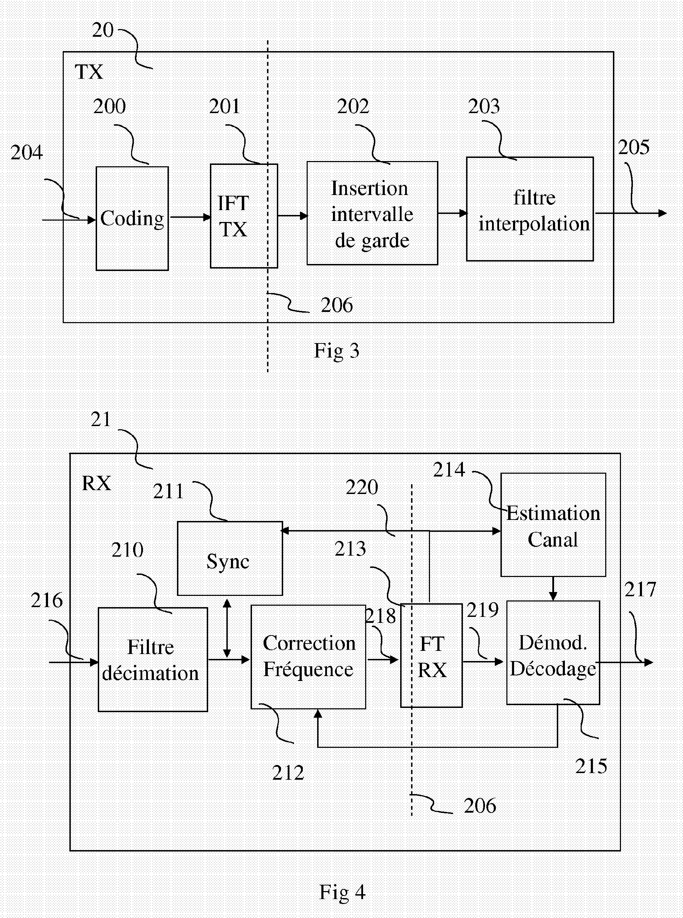

La figure 3 illustre le module de transmission OFDM 20 qui comprend :

- un codeur 200 qui code un signal entrant de données avec un code de canal (par exemple Reed-Solomon, convolutif, turbo-codes, ...) en provenance du module 26 via une liaison 204 ;
- un opérateur IFT 201 effectuant une transformée de Fourrier inverse sur le signal codé par le codeur 200 et fournissant des symboles OFDM ;
- un module 202 d'insertion d'intervalle de garde dans le flux de symboles OFDM reçu de l'opérateur IFT 201 pour faciliter la synchronisation coté récepteur ; et
- un filtre d'interpolation 203 recevant le flux de symboles OFDM avec intervalle de garde du module 202 et transmettant le signal filtré au convertisseur 22 via une liaison 205 (le filtre d'interpolation permet de faciliter le respect des gabarits du filtrage réalisé par le module de transmission)..

La figure 4 illustre le module de réception OFDM 21 qui comprend :

- un filtre de décimation 210 (effectuant l'opération inverse du filtre d'interpolation) recevant un signal correspondant à une trame OFDM du convertisseur 23 via une liaison 216 (ce signal reçu par l'interface 24 et correspondant à une trame avec préambule étant généralement dégradé et bruité après passage dans un canal de transmission contenant du bruit et soumettant le signal à des échos multiples) ;
- un module de synchronisation 211 effectuant une synchronisation du signal filtré par le filtre 210 en utilisant le préambule d'une trame reçue et un contrôle automatique de gain, une information de synchronisation fournie par un démodulateur 215 permettant d'affiner la synchronisation si nécessaire ;
- un module de correction de fréquence 212 corrigeant la fréquence du signal synchronisé par le module 211, une information de correction fournie par le démodulateur 215 permettant d'affiner la correction de fréquence si nécessaire ;
- un opérateur FT 213 effectuant une transformée de Fourrier sur des symboles OFDM transmis par le module 211 (ces symboles étant présents dans le signal reçu par le module 212) et fournissant un signal correspondant à des données de référence à un estimateur de canal 214 et un signal correspondant à des données à décoder au démodulateur 215 ;
- l'estimateur de canal 214 qui calcule une réponse de canal sur base de symboles de référence fournis par l'opérateur 213 et des coefficients d'égalisation puis les fournit au démodulateur 215;et
- le démodulateur 215.

Le démodulateur 215 démodule le signal de données à décoder fourni par l'opérateur 213 en utilisant la réponse de canal et les coefficients d'égalisation fournis par l'estimateur 214, et une synchronisation aidée par les pilotes insérés dans le signal OFDM. De plus, le démodulateur 215 désentrelace les données (opération duale de l'entrelacement effectué coté transmission) et décode les données désentrelacées (suivant une opération duale du codage effectué coté transmission, en utilisant, par exemple, un algorithme de Viterbi si les données ont été codées avec un code convolutif). Enfin, le démodulateur 215 fournit les données décodées au module 26 via une liaison 217 et une information de correction de fréquence au module 212.

La couche physique est ainsi divisée en un domaine temporel (après l'opérateur IFT 201 ou avant l'opérateur FT 213) directement relié aux convertisseurs 22 ou 23 et en un domaine fréquentiel (avant l'opérateur IFT 201 ou après l'opérateur FT 213) qui supporte des opérations de traitement de signal (la séparation entre les deux domaines étant symbolisée par le trait en pointillés 206).

Selon l'invention, les opérateurs IFT 201, FT 213, le module de synchronisation 211 et l'estimateur 214 calculant des coefficients de correction effectuent tous ou en partie des opérations utilisant une représentation des signaux sous une forme du type RNS, QRNS et/ou intermédiaire. Ainsi, avantageusement, le coeur OFDM mis en oeuvre dans les modules 20 et/ou 21 est réduit en taille et en complexité, est plus efficace et consomme moins d'énergie.

On rappelle qu'une FT à N points (valant par exemple 256) consiste à prendre N entrées complexes (la $i^{\text{ème}}$ entrée étant notée input(i)) et à fournir N sorties (la $k^{\text{ième}}$ sortie étant notée output(k)) telles que définies ci-après:

$$Output(k) \quad = \quad \sum_{i=-N/2+1}^{N/2} input(i) * \exp(-2 ji\pi k / N) \qquad (1)$$

En utilisant cette expression, selon l'invention, la taille du résultat (en nombre de bits) est plus faible qu'avec des passes successives dites du papillon. Ainsi, si le signal d'entrée et les facteurs d'exponentielle tiennent sur 10 bits, le résultats tient seulement sur 20 bits auxquels s'ajoutent quelques bits pour la somme (typiquement au plus 6 pour une FT à 256 points). Ainsi, ceci est réalisable avec une base RNS valant (241 ; 233 ; 229).

Les nombres de la base sont préférentiellement proches d'une puissance de 2 (ici 256) pour tirer avantage de la plus grande dynamique tout en limitant le nombre de bits (ici 8). Selon une variante, on peut utiliser aussi des nombres codés sur 9 bits, si le coût de mise en oeuvre est acceptable.

Comme indiqué précédemment, les nombres de la base sont premiers entre eux. Préférentiellement, les nombres de la base sont premiers afin de tirer parti des corps de Gallois (ou GF de l'anglais « Gallois Field ») comme expliqué ci-après.

Nous appelons Z/m1Z, l'ensemble d'ordre fini {0,1,2,...,m1-1} sur lequel un nombre est défini. Cet ensemble est appelé Corps de Gallois si m1 est un nombre premier. En particulier, il existe au moins un élément, appelé élément primitif, noté a, et dont les puissances successives parcours l'intégralité de Z/m1Z sauf 0. On a :

Z/m1Z*= {a**1, a**2,a**3,..a**m1} (d'ordre m1-1) (l'opérateur ** désignant une élévation à la puissance)

(Z/m1Z*=Z/m1Z-{0}).

On en déduit que si b = a**ex et c= a**ey,
alors b*c= a**ex * a**ey = a**(ex+ey).

Ainsi, en représentant les nombres x et y par leur exposant, la multiplication est remplacée par une addition et le résultat peut être obtenu en effectuant l'opération de représentation inverse. Un système électronique peut mettre en oeuvre ces opérations à l'aide d'un additionneur et d'une table précalculée ou pré-enregistrée (look-up table) pour les opérations de conversion de représentation. Selon l'invention, on met en oeuvre les calculs de la relation (1) suivant cette méthode. En particulier, on peut définir un opérateur Log sur Z/m1Z, inverse de la fonction puissance de a (élément primitif) sur Z/m1Z (si b=a**ex, alors Log(b) =ex). De même, la fonction puissance de a est appelée dans la suite fonction exp (ou exponentielle) dans Z/m1Z (si b=a**ex, exp(ex) = b).

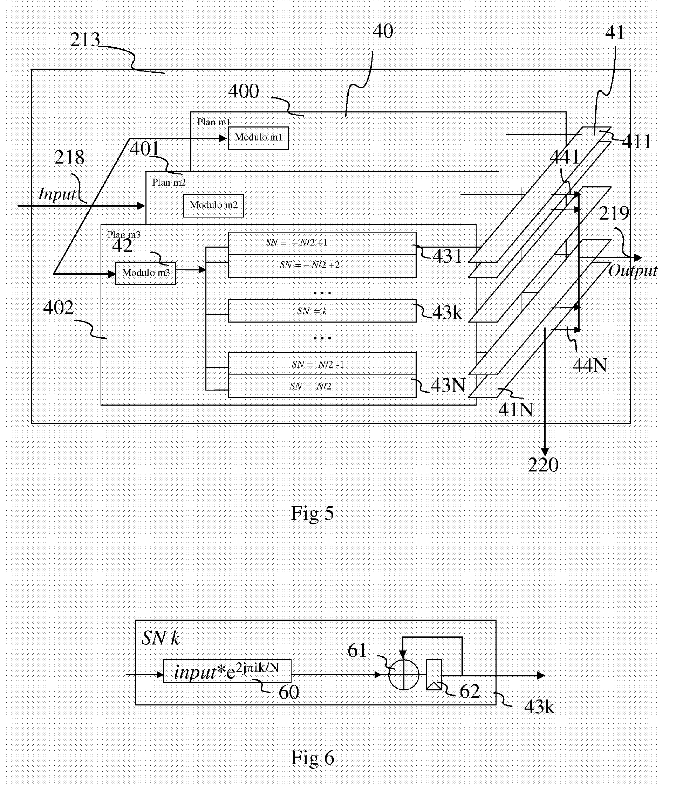

La figure 5 illustre le concept d'architecture de l'opérateur FT 213 mettant en oeuvre une représentation QRNS des signaux, l'opération de FT (à une constante près) suivant la relation (1) rappelée ci-après, avec une valeur de i comprise entre 0 et N-1 (quand on commence une transformée de Fourrier sur un symbole OFDM, le premier échantillon est numéroté 0 et le dernier N-1 lorsque l'intervalle de garde a été enlevé) :

$$Output(k) \quad = \quad \sum_{i=0}^{N-1} input(i) * \exp(-2 ji\pi k / N) \qquad (1)$$

A titre illustratif, on suppose que la base RNS comprend trois nombres m1, m2 et m3 codés sur 9 bits. L'opérateur 213 accepte en entrée un signal numérique comprenant N échantillons *input(i)* avec i compris entre 0 et N-1 et input(i), suivant une représentation binaire, avec une correspondance directe entre la magnitude du signal et sa représentation.

L'opérateur effectue des opérations en parallèle représentées schématiquement suivant trois plans 400 à 402, associés respectivement à m1, m2 et m3.

On effectue d'abord une conversion du signal reçu dans une base QRNS. Ainsi, dans les plans 400 à 402, on représente d'abord les signaux Input(i) modulo respectivement m1, m2 et m3.

Selon des variantes de l'invention, on a plus que trois vecteurs dans la base, par exemple, 4, 5 ou 6 vecteurs.

Ensuite, dans chaque plan, pour chaque k$^{ième}$ sous porteuse SN (les sous-porteuses étant numérotées de -N/2+1 à N/2), on calcule $Output(k) = \sum_{i=0}^{N-1} input(i) * \exp(-2 j i \pi k / N)$. Ainsi, pour le plan 402 correspondant à m3, on a après une conversion 42, modulo m3, N branches 431 à 43N de calculs en parallèle, la k$^{ième}$ branche calculant $Output(k) = \sum_{i=0}^{N-1} input(i) * \exp(-2 j i \pi k / N)$ modulo m3 en accumulant le résultat du produit pour obtenir la somme avec i variant de 0 à N-1 sur la durée du symbole OFDM. On rappelle que la notation exponentielle d'un nombre complexe exp(j$\alpha$) correspond à un nombre complexe de module 1 et d'argument $\alpha$ soit cos$\alpha$ + jsin$\alpha$.

Pour chaque sous-porteuse, on obtient ainsi son expression dans une représentation modale (RNS ou QRNS), chaque plan pour une branche de même rang produisant une composante en représentation modale.

Puis, on effectue une conversion 411 à 41 N vers une représentation binaire pour produire un résultat binaire sur les sorties respectivement 441 à 44N correspondant à la sortie 219 (concaténation symbolique des sorties 441 à 44N), la conversion passant par une représentation intermédiaire MRC. La représentation intermédiaire MRC est transmise sur une sortie 220.

Tous les branches de sortie 411 à 41 N se terminent avec un bloc permettant d'obtenir facilement une représentation binaire. Il n'y a pas de gros bloc de traitement (en particulier, ces opérations peuvent être mises en oeuvre avec des tables pré-enregistrées effectuant les multiplications par des constantes et des additions). Selon une variante, on factorise l'étage de sortie pour tous ou partie des étages de sorties, en fonction des besoins des sorties 219 et/ou 220, en utilisant un nombre réduit de convertisseurs de mode modal à MRC puis à un mode binaire, afin de simplifier la mise en oeuvre.

Une mise en oeuvre de l'opération 43k est illustrée en regard de la figure 6.

La branche 43k comprend un opérateur 60 du type table préenregistrée qui effectue l'opération $Output(k) = \sum_{i=0}^{N-1} input(i) * \exp(-2 j i \pi k / N)$ à partir des entrées successives correspondant à input(i). L'opérateur 60 alimente une première entrée de l'additionneur 61.

La sortie de l'additionneur 61 alimente un registre accumulateur 62 qui conserve la donnée présente en entrée sur un front montant d'un signal de commande (typiquement une horloge synchronisée avec l'arrivée des échantillons). La sortie du registre correspond à la sortie de la branche 43k et alimente la deuxième entrée de l'additionneur 61.

Les calculs effectués dans les branches 431 à 43N et 411 à 41N sont très rapides puisqu'ils sont effectués modulo mx sur peu de bits (par exemple 8 ou 9). Aussi, selon une variante de réalisation de l'opérateur 213, afin de réduire la complexité d'un composant le mettant en oeuvre, certaines branches sont rassemblées et les calculs correspondants à plusieurs branches sont effectués par une même branche de manière séquentielle. A titre illustratif, pour une mise en oeuvre dans le cadre d'une réception d'un signal suivant la norme IEEE802.16a, un échantillon entrant peut arriver au rythme de 5MHz, alors que le traitement des sous-porteuses peut être cadencé à 80 MHz voire à une vitesse beaucoup plus élevée (par exemple 160 MHz), de sorte que 16 sous-porteuses (voire 32 avec une fréquence d'horloge à 160 MHz) peuvent être traitées séquentiellement sans ralentir le traitement en réception.

Il existe une symétrie entre les calculs respectifs des sous-porteuses k et -k. Aussi, en pratique, on effectue N/2 calculs (correspondant, par exemple, aux N/2 premières branches) (en effet, l'expression exp(-2ij$\pi$k/N) est inverse de exp(-2ij$\pi$(-k)/N), les résultats intermédiaires de la branche correspondant à k étant réutilisés par la branche correspondant à (-k).

Par ailleurs, une partie latérale du spectre COFDM n'est pas utilisé et, ainsi, la partie correspondante de la FT n'est pas utilisée (pour éviter des interférences entre canaux). Ainsi, selon une variante de réalisation, on ne calcule que 80 % des sous-porteuses, soit 200 au lieu de 256 (correspondant, par exemple, à une transmission OFDM à 256 porteuses comme spécifié dans la norme IEEE802.16). En effet, dans le spectre OFDM, les cotés du spectre ne sont pas utilisés (on a une garde fréquentielle par rapport aux fréquences voisines).

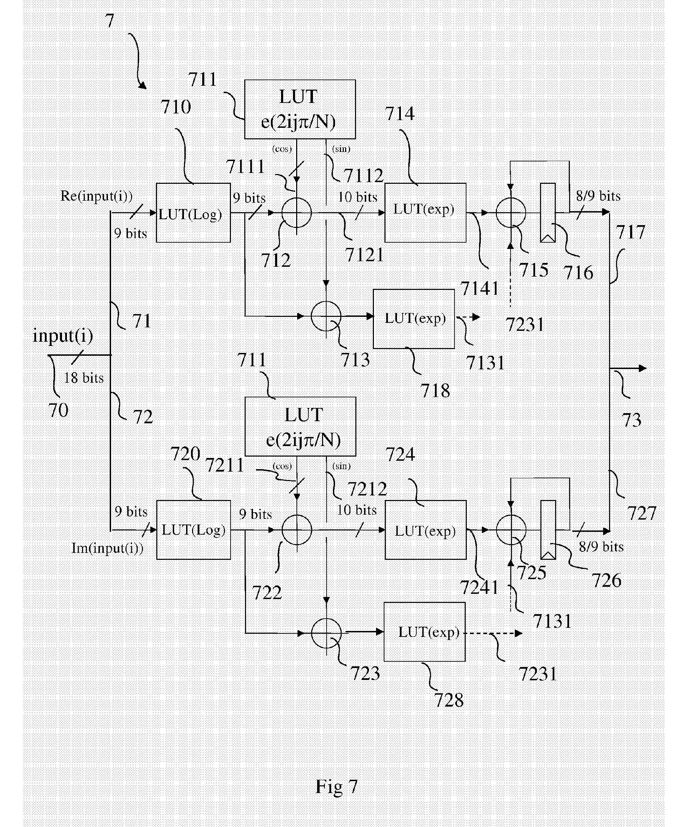

La figure 7 détaille un exemple de réalisation matérielle d'une branche 7 correspondant à une branche 431 à 43N et dont une représentation schématique a été donnée en regard de la figure 6.

L'opération effectuée (explicitée ci-après en RNS pour plus de clarté) est :

$$Output(k) \quad = \quad \sum_{i=-N/2+1}^{N/2} input(i) * \exp(-2ji\pi k / N) \qquad (1)$$

On note Re(x) la partie réelle d'un nombre complexe x et Im(x) sa partie imaginaire (soit x = Re(x) + j*Im(x)).

Ainsi, la relation (1) se subdivise en 2 relations :

$$\mathrm{Re}(Output(k)) \quad = \quad \sum_{i=-N/2+1}^{N/2} \mathrm{Re}(input(i)) * \cos(-2i\pi k / N) - \mathrm{Im}(input(i)) * \sin(-2i\pi k / N)$$

et

$$\mathrm{Im}(Output(k)) \quad = \quad \sum_{i=-N/2+1}^{N/2} \mathrm{Re}(input(i)) * \sin(-2i\pi k / N) + \mathrm{Im}(input(i)) * \cos(-2i\pi k / N)$$

La mise en oeuvre est réalisée en QRNS.

La branche 7 comprend une entrée input(i) 70 sur 18 bits qui se subdivise en 2 sous branches 71 et 72 correspondant respectivement à Re(input(i)) et Im(input(i)).

La branche 7 comprend une table préenregistrée 710 (respectivement 720) permettant de convertir l'entrée (Re(input(i))) 71 (respectivement Im(input(i)) 72) en la valeur de son Log sur 9 bits.

La sortie de la table 710 (respectivement 720) et la partie réelle d'une sortie d'une table préenregistrée 711 comprenant des valeurs précalculées de exp(j*2π*i/N) dans Z/mZ alimentent un additionneur 712 (respectivement 722).

La sortie de la table 710 (respectivement 720) et la partie imaginaire d'une sortie de la table préenregistrée 711 alimentent un additionneur 713 (respectivement 723).

La sortie de l'additionneur 712 (respectivement 722) sur 10 bits adresse une table 714 (respectivement 724) préenregistrée permettant de convertir l'entrée en son modulo m auquel est appliqué un opérateur exp. En sortie de la table 714 (respectivement 724), on a la partie réelle (respectivement imaginaire) de input(i)*cos().

La sortie de l'additionneur 713 (respectivement 723) sur 10 bits adresse une table 728 (respectivement 718) préenregistrée permettant de convertir l'entrée en son modulo m auquel est appliqué un opérateur exp affecté d'un facteur (-1) (respectivement +1). En sortie de la table 728 (respectivement 718), on a la partie imaginaire (respectivement réelle) de input(i)*sin().

Les opérateurs sinus (ou sin()) et cosinus (ou cos()) sont représentées sur des valeurs entières comprises entre -m et m pour pouvoir être traitées dans Z/mZ (on suppose qu'on applique un facteur m aux sinus et cosinus de sorte que cos(0) est équivalent à m).

La sortie des tables 714 et 728 (respectivement 724 et 718) alimentent un additionneur 715 (respectivement 725) dont la sortie est enregistrer dans un registre 716 (respectivement 726) sur un signal de commande (typiquement un front montant d'horloge). La sortie du registre 716 (respectivement 726) alimente également l'additionneur 715 (respectivement 726). En sortie, lorsque les N valeurs de input(i) pour i allant de -N/2+1 à N/2 ont parcouru la branche 7, le registre 716 (respectivement 726) présente sur sa sortie 717 Re(Output(k)) (respectivement 727 Im(Output(k)). Les sorties 717 et 727 sont combinées en une sortie 73 pour former une sortie Output(k) complexe.

Il n'y a pas de multiplieur dans la branche 7 qui est donc relativement simple à mettre en oeuvre.

Par ailleurs, une correction d'offset de porteuse peut fusionner avec les facteurs exp(), ce qui n'est pas possible avec une FFT du type papillon.

On peut également appliquer, sans coût supplémentaire, différentes corrections d'offsets à différents sous-ensembles de sous porteuses, ce qui peut être intéressant dans un récepteur OFDMA (de l'anglais « OFDM Access » ou accès OFDM en français). En effet, selon l'invention, on peut changer les tables d'opérateur exp() 714, 724, 718 et 728 pour effectuer une correction de fréquence. On peut également décider de corriger une fréquence particulière dans le spectre OFDM. Ce qui peut être intéressant dans les systèmes où il peut y avoir plusieurs sources d'émission à porteuses multiples, notamment dans des systèmes OFDMA (par exemple dans un système IEEE802.11 qui utilise de l'OFDMA (le spectre OFDM est partagé entre plusieurs destinataires)). Dans ce cas, un récepteur et/ou un émetteur peuvent appliquer des corrections de fréquences en fonction de la source. (ce qui n'est pas possible en effectuant une FFT selon l'état de l'art).

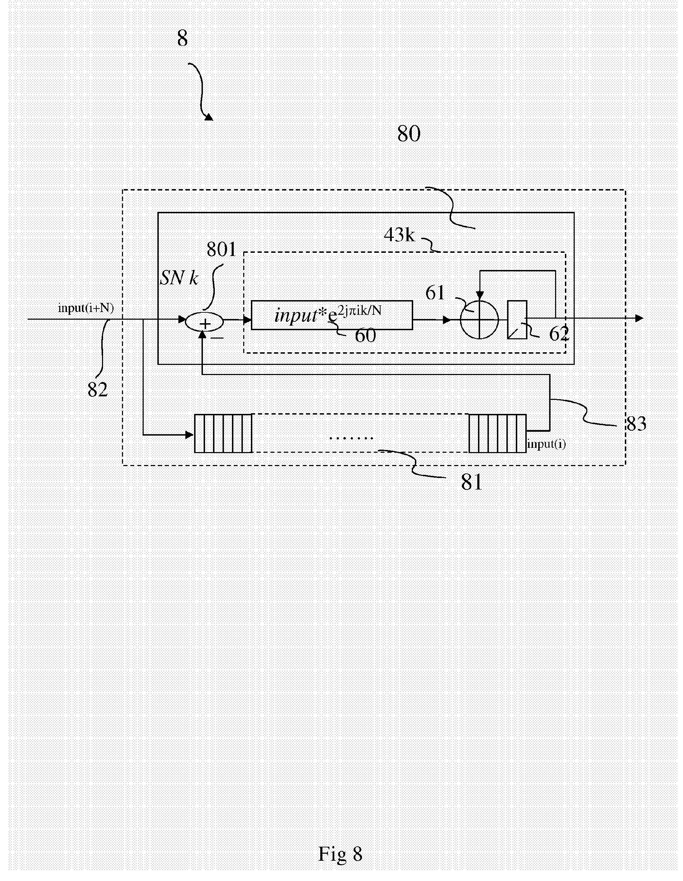

La figure 8 présente une mise en oeuvre d'une branche 8 avec une transformée de Fourier glissante afin d'avoir une sortie à chaque cycle d'horloge, selon une variante de réalisation de l'invention. La branche 8 remplace l'une quelconque des branches 431 à 43N dans le module 213, avec des paramètres propres à la porteuse considérée (valeur du paramètre k) et au plan contenant la branche (m valant m1, m2 ou m3). Cette variante permet d'avoir une transformée de Fourier de façon continue au fur et à mesure de l'entrée des échantillons input(i) dans la branche 8.

Cette variante peut avantageusement être mise en oeuvre dans un module de synchronisation ou de SDR (de l'anglais « Software Defined Radio » ou « Radio définie par logiciel » en français) ou d'une radio cognitive (de l'anglais « cognitive radio » où on ne connaît pas tout le spectre et où on utilise le spectre au moment où il est disponible). En effet, cette variante permet de faire une analyse fréquentielle des signaux entrant et/ou d'être en veille en attente d'un signal sur lequel le récepteur peut se synchroniser. Dans le cadre d'une réception d'un signal OFDM, on peut notamment mettre en oeuvre une transformée de Fourrier glissante selon l'invention pour se passer d'une synchronisation grossière lorsque le récepteur attend un préambule et effectuer directement une synchronisation fine et précise.

Revenons à la formule, appliqué à l'instant L :

$$Output(k) \quad = \quad \sum_{i=L}^{L+N-1} input(i) * \exp(-2 ji\pi k / N) \qquad (1)$$

On peut dire que Output(k) représente la transformée de Fourrier à l'instant L sur un référentiel de phase égale à exp(-jL.πk/N), c'est-à-dire avec un déphasage augmentant linéairement en fonction du rang k.

On en déduit :

$$Output(k) \quad = \quad input(L)\exp(-2 jL\pi k / N) + \sum_{i=L+1}^{L+N-1} input(i) * \exp(-2 ji\pi k / N)$$

Puis :

$$Output(k) - input(L)\exp(-2 jL\pi k / N) + input(L+N)\exp(-2 j(L+N)\pi k / N) \quad =$$
$$Output(k) - input(L)\exp(-2 jL\pi k / N) + input(L+N)\exp(-2 jL\pi k / N) \quad =$$
$$Output(k) + (-input(L) + input(L+N))\exp(-2 jL\pi k / N) \quad =$$
$$\sum_{i=L+1}^{L+N} input(i) * \exp(-2 ji\pi k / N)$$

On peut en déduire une relation entre les sorties Output(k) correspondant respectivement à l'instant L (noté t= L) et à l'instant suivant, L+1 (noté t=L+1) :

$$Output(k)_{(t=L)} + (-input(L) + input(L+N))\exp(-2 jL\pi k / N) \quad =$$
$$Output(k)(t = L+1)$$

Ce mécanisme permet donc de calculer Output(k) à l'instant L+1, c'est-à-dire égal à la TF à l'instant L+1 avec un référentiel de phase linéaire en fonction du rang k égal à exp(-j(L+1).πk/N).La figure 8 illustre une mise en oeuvre tenant compte de la relation entre les sorties aux instants L et L+1. En résumé, en mettant en oeuvre une ligne à retard 81 avec une profondeur de N échantillons, il est obtenu une sortie de transformée de Fourrier à chaque instant, avec la restriction que la sortie sera donnée dans un référentiel avec une rampe de phase linéaire s'accroissant le long du spectre et dont la pente s'accentue à chaque nouvelle sortie. En fonction de l'utilisation des sorties de la transformée de Fourrier, il pourra être fait si besoin abstraction de ce référentiel dans une étape de traitement suivante (par exemple dans l'égaliseur ou les modules de synchronisation).

Ainsi, les échantillons successifs input(i) présents sur une entrée 82 alimentent à la fois un soustracteur 801 (par l'entrée positive) et la ligne à retard 81 décalant le signal de N cycles d'horloge. La sortie de la ligne à retard 81 correspondant à l'entrée input(i) décalée de N cycles d'horloges alimente l'entrée négative du soustracteur 801.

La sortie du soustracteur 801 correspondant à la différence entre les entrées input(i) aux instants respectifs L+N et L (soit input(i+N)-input(i)) alimente un module similaire à la branche 43k précédemment décrite.

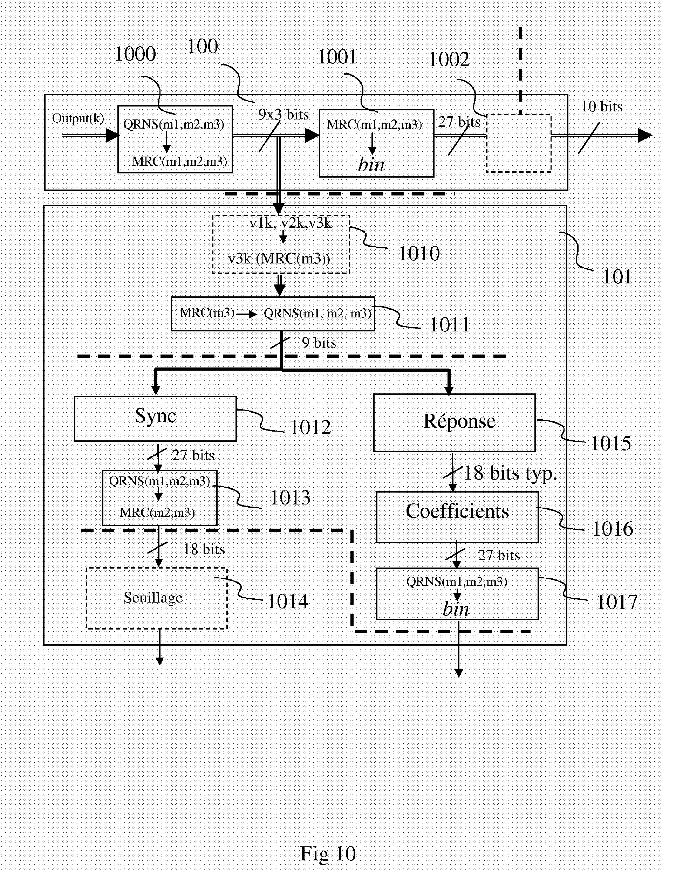

La figure 10 illustre une synchronisation et une détermination de coefficients d'égalisation mise en oeuvre en appliquant une représentation modale des signaux selon l'invention. La figure 10 précise notamment les types de représentation mis en oeuvre (modale, intermédiaire et binaire) et les différentes conversions.

Un moteur COFDM comprend également des blocs de synchronisation, une commande automatique de gain, une détection de préambule, un calcul de réponse impulsionnelle de canal et des calculs de coefficients d'égalisation. Il est difficile d'effectuer ces opérations dans une représentation modale sur le même domaine, car le contrôle automatique de gain et le préambule concernent des nombres relatifs à une puissance (c'est-à-dire à des sommes de carrés de puissance de signal), ce qui conduit à un grand nombre de bits et la réponse impulsionnelle nécessite souvent le calcul de deux transformées successives, ce qui conduit également à un grand nombre de bits. Aussi, selon l'invention, préférentiellement, le traitement de la synchronisation prend en compte la représentation intermédiaire fournie par l'opérateur 213 avant la conversion en représentation binaire.

Typiquement, la sortie de l'opérateur 213 correspond à l'ensemble des sorties Output(k) correspondant à chaque sous-porteuse k variant de -N/2 à +N/2. Une sortie Output(k) est donc définie par trois nombres m1k, m2k, m3k en représentation QRNS avec la base (m1, m2, m3) ou par trois nombre v1k, v2k et v3k en représentation intermédiaire telle que la sortie output(k) vaut v1k + m1*v2k + m1*m2*v3k. Avantageusement, afin de réduire le nombre de bits significatifs, on ne conserve que la coordonnée la plus significative en représentation intermédiaire (ce qui revient à arrondir la sortie au produit m1*m2*v3k et à changer d'échelle en divisant par le produit m1*m2).

Le block 100 de la figure 10 illustre l'étage de sortie de l'opérateur 213 de transformée de Fourrier qui comprend :

- un convertisseur 1000 convertissant le signal Output(k) représenté en QRNS dans la base (m1, m2, m3) vers une représentation MRC sur 3x9 bits ;
- un convertisseur 1001 convertissant le signal Output(k) représenté en MRC issu du convertisseur 1000 en une représentation binaire ; et
- une prise en compte 1002 des bits les plus significatifs pour réduire à 10 bits l'échelle du signal Output(k) représenté en binaire, le signal ainsi obtenu alimentant le démodulateur 215.

L'opérateur 1002 ainsi que tous les opérateurs de la figure 10 représentés en pointillés correspondent à de mises en correspondances de signaux ; elles sont donc triviales et leur mise en oeuvre ne coûte rien.

Le convertisseur 1000 alimente un bloc de synchronisation et de calcul de coefficients d'égalisation 101, qui comprend :

- une prise en compte 1010 de la composante la plus significative de la sortie Output(k) représentée en MRC soit v3k ;
- un convertisseur 1011 convertissant la composante v3k de Output(k) en QRNS dans la base (m1, m2, m3), la sortie du convertisseur 1011 étant sur 9 bits ;
- un sous-bloc de synchronisation ; et
- un sous-bloc de calcul des coefficients de la réponse impulsionnelle du canal.

Le sous-bloc de synchronisation (particulièrement simple sans multiplieur) est alimenté par Output(k) fourni par le convertisseur 1011 et comprend :

- un module de synchronisation 1012 alimenté par le convertisseur 1011 et qui effectue une somme en fréquence du carré du signal d'entrée, le résultat étant sur 27 bits ;
- un convertisseur 1013 convertissant le signal issu du module de synchronisation 1012 représenté en QRNS dans la base (m1, m2, m3) vers une représentation MRC, le résultat étant sur 18 bits ;
- une prise en compte 1014 des bits les plus significatifs pour réduire à 8 bits l'échelle du signal de synchronisation représenté en binaire, le signal ainsi obtenu alimentant le module d'AGC.

La recherche de synchronisation dans le domaine fréquentiel suppose la mise en place d'une transformée de Fourrier à fenêtre glissante tel qu'illustré en figure 8.

Le module de synchronisation 1012 effectue une somme en fréquences simple pour utilisation du type AGC et une somme pondéré en fonction d'un motif pour une détection de préambule.

Pour une opération de type AGC, on n'a pas besoin de revenir en représentation binaire, une table de conversion de gain peut être adressée directement par la représentation MRC.

L'invention permet une réduction du bruit par filtrage fréquentiel puisqu'il suffit d'omettre certaines fréquences.

Le sous-bloc de calcul des coefficients de la réponse impulsionnelle du canal est alimenté par Output(k) correspondant à un symbole OFDM émis connu fourni par le convertisseur 1011 et comprend :

- un module 1015 de calcul de transformée de Fourrier inverse partielle permettant de déterminer la réponse impulsionnelle du canal, le résultat étant sur 18 bits ;
- un module 1016 de calcul de transformée de Fourrier partielle alimentée par le module 1015 et fournissant un résultat sur 27 bits ; et
- un convertisseur 1016 alimenté par le module 1016 et convertissant le signal d'entrée représenté en QRNS en un signal de sortie binaire.

Pour le calcul des coefficients de la réponse impulsionnelle, des transformées de Fourrier partielles sont préférentiellement effectuées par les modules 1015 et 1016, sur typiquement un quart ou moins d'une transformée de Fourrier complète, ce qui peut être facilement effectué en représentation modale avec calcul de type force brute qui est façonnable contrairement à une FFT de l'état de l'art utilisant la figure du papillon. Ici, une transformée de Fourrier inverse partielle calcule les composantes temporelles les plus faibles (seules ces composantes étant significative pour une réponse impulsionnelle).

Selon l'invention, l'émetteur met en oeuvre une transformée de Fourrier inverse dans l'opérateur IFT 201. Ce dernier a une structure tout à fait similaire à la structure de l'opérateur 213 de transformée de Fourrier mis en oeuvre dans le récepteur, seule la nature (ici données d'une trame à émettre pouvant être placé sur une constellation correspondant à une modulation, par exemple, à quatre phases (QPSK de l'anglais « Quaternary Phase Shift Keying ») ou à modulation amplitude en quadrature (QAM de l'anglais « Quadrature Amplitude Modulation »)) et le nombre de bits (plus faible) de l'entrée input(i) changeant dans la formule de transformée de Fourrier inverse :

$$Output(k) \quad = \quad \sum_{i=L}^{L+N-1} input(i) * \exp(+2 ji \pi k / N) \qquad (1'')$$

Bien entendu, l'invention ne se limite pas aux modes de réalisation décrits précédemment.

En particulier, l'invention est compatible avec des communications sans fil utilisant des porteuses multiples et notamment avec des transmission ou réception (et les dispositifs correspondant) mis en oeuvre dans des systèmes de réseaux locaux sans fil, des réseaux mobiles ou fixes à courtes ou longues distances, ou des communications point à point. En particulier, l'invention pourra être appliquée dans le cadre de la norme IEEE 802.16-2004 de réseaux fixes et nomades et de ses évolutions futures (dénommées IEEE 802.16e). En outre, l'invention est également compatibles avec des transmissions filaires utilisant une modulation à porteuses multiples (notamment OFDM et DMT), tel que des communications par courants porteurs ou xDSL.

Selon une variante de l'invention, une représentation modale n'est utilisé que dans une partie du moteur de réception du signal à porteuses multiples et seule une partie des blocs de transformée de Fourrier, de synchronisation, de commande automatique de gain, de détection de préambule, de calcul de réponse impulsionnelle de canal et de calculs de coefficients d'égalisation met en oeuvre une représentation modale.

## Revendications

1. Procédé de réception d'un signal à porteuses multiples, le procédé comprenant une étape de démodulation (21) dudit signal à porteuses multiples, **caractérisé en ce que** ladite étape de démodulation (21) comprend les étapes de :

   - conversion dudit signal à porteuses multiples en représentation binaire en une représentation dans une base d'au moins deux nombres premiers entre eux sur un espace fini de taille égale au produit des nombres premiers entre eux ; et
   - pour chacun desdits nombres premiers entre eux, transformée de Fourrier (400 à 402) à fenêtre glissante dudit signal en représentation modale de type « Residue Number System » RNS ou « quadratique RNS » QRNS projeté sur l'espace généré par ledit nombre, dite étape de calcul dans espace modal à une dimension ;
   - synchronisation basée sur ladite transformée de Fourrier à fenêtre glissante.

2. Procédé selon la revendication 1, **caractérisé en ce qu'**il comprend une étape de conversion du signal résultant de l'étape de calcul dans espace modal à une dimension en représentation binaire.

3. Procédé selon la revendication 1, **caractérisé en ce que** ladite étape de calcul dans espace modal à une dimension comprend des étapes de calcul de transformée de Fourrier (431 à 43N, 7, 8) pour chaque porteuse du signal à porteuses multiples.

4. Procédé selon la revendication 1, **caractérisé en ce que** ladite étape de calcul dans espace modal à une dimension comprend des étapes de calcul de transformée de Fourrier pour un nombre réduit de porteuses du signal à porteuses multiples.

5. Procédé selon l'une quelconque des revendications 3 à 4, **caractérisé en ce que** ladite étape de calcul dans espace modal à une dimension comprend une correction différentiée de fréquence en fonction de la porteuse considérée.

6. Procédé selon l'une quelconque des revendications 1 à 5, **caractérisé en ce qu'**il comprend une étape de conversion d'un signal à représentation modale en une représentation intermédiaire de type « Mixed Radix Coefficient » MRC.

**7.** Procédé selon l'une quelconque des revendications 1 à 6, **caractérisé en ce que** ledit signal à porteuses multiples est un signal OFDM.

**8.** Dispositif de réception (21) d'un signal à porteuses multiples, **caractérisé en ce qu'**il comprend :

- des moyens de démodulation dudit signal à porteuses multiples qui comprennent eux-mêmes des moyens de conversion d'un signal reçu en représentation binaire en une représentation modale dans une base d'au moins deux nombres premiers entre eux sur un espace fini de taille égale au produit des nombres premiers entre eux ;
- des moyens de calcul, pour chacun desdits nombres premiers entre eux, de transformée de Fourrier à fenêtre glissante dudit signal en représentation modale de type « Residue Number System » RNS ou « quadratique RNS » QRNS projeté sur l'espace généré par ledit nombre ;
- des moyens de synchronisation pour synchroniser ledit signal à porteuses multiples basé sur la transformée de Fourrier à fenêtre glissante dudit signal à porteuses multiples.

**9.** Dispositif selon la revendication 8, **caractérisé en ce que** le dispositif comprend en outre des moyens de conversion du signal résultant de l'étape de calcul dans espace modal à une dimension en représentation binaire.

**10.** Dispositif selon la revendication 8, **caractérisé en ce que** lesdits moyens de calcul sont configurés pour le calcul d'une transformée de Fourrier (431 à 43N, 7, 8) pour chaque porteuse du signal à porteuses multiples.

**11.** Dispositif selon la revendication 8, **caractérisé en ce que** lesdits moyens de calcul sont configurés pour le calcul d'une transformée de Fourrier pour un nombre réduit de porteuses du signal à porteuses multiples.

**12.** Dispositif selon l'une quelconque des revendications 10 à 11 **caractérisé en ce que** lesdits moyens de calcul comprennent des moyens pour appliquer une correction différentiée de fréquence en fonction de la porteuse considérée.

**13.** Dispositif selon l'une quelconque des revendications 8 à 12, **caractérisé en ce que** le dispositif comprend en outre des moyens de conversion d'un signal à représentation modale en une représentation intermédiaire de type « Mixed Radix Coefficient » MRC.

**14.** Dispositif selon l'une quelconque des revendications 8 à 13, **caractérisé en ce que** ledit signal à porteuses multiples est un signal OFDM.

**Patentansprüche**

**1.** Verfahren zum Empfangen eines Mehrträgersignals, wobei das Verfahren einen Schritt der Demodulation (21) des besagten Mehrträgersignals, **dadurch gekennzeichnet, dass** der besagte Schritt der Demodulation (21) die folgenden Schritte umfasst:

- Umwandlung des besagten Mehrträgersignals in binärer Darstellung in eine Darstellung auf einer Basis von mindestens zwei relativen Primzahlen in einem endlichen Raum einer Größe, die gleich dem Produkt der relativen Primzahlen ist; und
- für jede der besagten relativen Primzahlen Fourier-Transformation (400 und 402) mit Gleitfenster des besagten Signals in modaler Darstellung vom Typ "Restzahlensystem" RNS oder "quadratisches RNS" QRNS, die auf den durch die besagte Zahl erzeugten Raum projiziert wird, Schritt der Berechnung in einem eindimensionalen modalen Raum genannt;
- Synchronisation auf der Basis der besagten Fourier-Transformation mit Gleitfenster.

**2.** Verfahren nach Anspruch 1, **dadurch gekennzeichnet, dass** es einen Schritt der Umwandlung des Signals, das aus dem Schritt der Berechnung in einem eindimensionalen modalen Raum resultiert, in eine binäre Darstellung umfasst.

**3.** Verfahren nach Anspruch 1, **dadurch gekennzeichnet, dass** der besagte Schritt der Berechnung in einem eindimensionalen modalen Raum Schritte der Berechnung einer Fourier-Transformation (431 bis 43N, 7, 8) für jeden Träger des Mehrträgersignals umfasst.

**4.** Verfahren nach Anspruch 1, **dadurch gekennzeichnet, dass** der besagte Schritt der Berechnung in einem eindimensionalen modalen Raum Schritte der Berechnung einer Fourier-Transformation für eine verringerte Anzahl von Trägern des Mehrträgersignals umfasst.

**5.** Verfahren nach einem der Ansprüche 3 bis 4, **dadurch gekennzeichnet, dass** der besagte Schritt der Berechnung in einem eindimensionalen modalen Raum eine differenzierte Frequenzkorrektur in Abhängigkeit von dem erwogenen Träger umfasst.

**6.** Verfahren nach einem der Ansprüche 1 bis 5, **dadurch gekennzeichnet, dass** es einen Schritt der Umwandlung eines Signals mit modaler Darstellung in eine Zwischendarstellung vom Typ "gemischter Radix-Koeffizient" MRC umfasst.

**7.** Verfahren nach einem der Ansprüche 1 bis 6, **dadurch gekennzeichnet, dass** das besagte Mehrträgersignal ein OFDM-Signal ist.

**8.** Vorrichtung zum Empfangen (21) eines Mehrträgersignals, **dadurch gekennzeichnet, dass** sie Folgendes umfasst:

- Mittel zur Demodulation des besagten Mehrträgersignals, die selbst Mittel zur Umwandlung eines empfangenen Signals in binärer Darstellung in eine modale Darstellung auf einer Basis von mindestens zwei relativen Primzahlen in einem endlichen Raum einer Größe, die gleich dem Produkt der relativen Primzahlen ist, umfassen;
- Mittel zur Berechnung einer Fourier-Transformation mit Gleitfenster des besagten Signals in modaler Darstellung vom Typ "Restzahlensystem" RNS oder "quadratisches RNS" QRNS, die auf den durch die besagte Zahl erzeugten Raum projiziert wird, für jede der besagten relativen Primzahlen;
- Mittel zur Synchronisation, um das besagte Mehrträgersignal auf der Basis der besagten Fourier-Transformation mit Gleitfenster des besagten Mehrträgersignals zu synchronisieren.

**9.** Vorrichtung nach Anspruch 8, **dadurch gekennzeichnet, dass** die Vorrichtung außerdem Mittel zur Umwandlung des Signals, das aus dem Schritt der Berechnung in einem eindimensionalen modalen Raum resultiert, in eine binäre Darstellung umfasst.

**10.** Vorrichtung nach Anspruch 8, **dadurch gekennzeichnet, dass** die besagten Mittel zur Berechnung auf die Berechnung einer Fourier-Transformation (431 bis 43N, 7, 8) für jeden Träger des Mehrträgersignals konfiguriert sind.

**11.** Vorrichtung nach Anspruch 8, **dadurch gekennzeichnet, dass** die besagten Mittel zur Berechnung auf die Berechnung einer Fourier-Transformation für eine verringerte Anzahl von Trägern des Mehrträgersignals konfiguriert sind.

**12.** Vorrichtung nach einem der Ansprüche 10 bis 11, **dadurch gekennzeichnet, dass** die besagten Mittel zur Berechnung Mittel zum Anwenden einer differenzierten Frequenzkorrektur in Abhängigkeit von dem erwogenen Träger umfassen.

**13.** Vorrichtung nach einem der Ansprüche 8 bis 12, **dadurch gekennzeichnet, dass** die Vorrichtung außerdem Mittel zur Umwandlung eines Signals mit modaler Darstellung in eine Zwischendarstellung vom Typ "gemischter Radix-Koeffizient" MRC umfasst.

**14.** Vorrichtung nach einem der Ansprüche 8 bis 13, **dadurch gekennzeichnet, dass** das besagte Mehrträgersignal ein OFDM-Signal ist.

**Claims**

**1.** Method for receiving a multi-carrier signal, the method comprising a demodulation step (21) of said multi-carrier signal, **characterised in that** the said demodulation step (21) comprises the steps of:

- conversion of said multi-carrier signal in binary representation into a representation in a base of at least two coprime numbers on a finite space of size equal to the product of the coprime numbers, and
- for each of said coprime numbers, sliding window Fourier transform (400 to 402) of said signal in modal representation of the type "Residue Number System" RNS or "quadratic RNS" QRNS projected on the space generated by said number, called calculation step in one-dimensional modal space,

- synchronisation based on said sliding window Fourrier transform.

2. Method according to claim 1, **characterised in that** it comprises a step of conversion of the signal resulting from the calculation step in one-dimensional modal space in binary representation

3. Method according to claim 1, **characterised in that** said step of one-dimensional modal space calculation comprises Fourrier transform calculation steps (431 to 43N, 7, 8) for each carrier of the multi-carrier signal.

4. Method according to claim 1, **characterised in that** said step of one-dimensional modal space calculation comprises Fourrier transform calculation steps for a reduced number of carriers of the multi-carrier signal.

5. Method according to any one of the claims 3 to 4, **characterised in that** said step of one-dimensional modal space calculation comprises a differentiated frequency correction according to the carrier considered.

6. Method according to any one of the claims 1 to 5, **characterised in that** it comprises a signal conversion step of a modal representation signal into an intermediary representation of type "Mixed Radix Coefficient" MRC.

7. Method according to any one of claims 1 to 6, **characterised in that** said multi-carrier signal is an OFDM signal.

8. Reception device (21) of a multi-carrier signal, **characterised in that** it comprises:

   - demodulation means of said multi-carrier signal that itself comprises the means to convert a signal received in binary representation into a modal representation in a base of at least two coprime numbers on a finite space of size equal to the product of the coprime numbers,
   - calculation means, for each of said coprime numbers, of sliding window Fourrier transform of said signal in modal representation of the type "Residue Number System" RNS or "quadratic RNS" QRNS projected on the space generated by said number,
   - synchronisation means to synchronise said multi-carrier signal based on the sliding window Fourrier transform of said multi-carrier signal.

9. Device according to claim 8, **characterised in that** the device further comprises a means of conversion of the signal resulting from the calculation step in one-dimensional modal space in binary representation.

10. Device according to claim 8, **characterised in that** said means of calculation are configured for the calculation of a Fourrier transform (431 to 43N, 7, 8) for each carrier of the multi-carrier signal.

11. Device according to claim 8, **characterised in that** said means of calculation are configured for the calculation of a Fourrier transform for a reduced number of carriers of the multi-carrier signal.

12. Device according to any one of the claims 10 to 11, **characterised in that** said means of calculation comprises means for applying a differentiated frequency correction according to the carrier considered.

13. Device according to any one of the claims 8 to 12, **characterised in that** it further comprises a signal conversion means of a modal representation signal into an intermediary representation of type "Mixed Radix Coefficient" MRC.

14. Device according to any one of claims 8 to 13, **characterised in that** said multi-carrier signal is an OFDM signal.

Fig 1

Fig 2

Fig 3

Fig 4

213    40    41

400

Plan m1    441    411

218    401

Input

Plan m2

Modulo m1

Modulo m2

42

Plan m3    SN = − N/2 +1    431    219

Modulo m3    SN = − N/2 +2

402    ...    Output

SN = k    43k

...

SN = N/2 -1    44N

SN = N/2    43N    41N

220

Fig 5

SN k

61

input*e$^{2j\pi ik/N}$    62

60    43k

Fig 6

Fig 7

8

80

43k

801

SN k

61

input(i+N)

$input*e^{2j\pi ik/N}$

60

62

82

83

input(i)

......

81

Fig 8

Fig 9

Fig 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ALARD ; LASSALE.** principles of modulation and channel coding fo digital broadcasting for mobile receivers. *technique de l'EBU,* Août 1987

- **KOSEK M R et al.** RNS-based GaAs signal processing system. *IEEE,* 15 Octobre 1989, 615-619